# EUROPÄISCHE PATENTSCHRIFT

(11) **EP 3 484 838 B1**
(45) Veröffentlichungstag und Bekanntmachung des Hinweises auf die Patenterteilung: **06.03.2024**
(21) Anmeldenummer: 17737524.3
(22) Anmeldetag: 03.07.2017
(51) Int. Cl.: C04B 41/87, C04B 41/89, F27B 9/24

(54) **ROLLE FÜR EINEN ROLLENOFEN MIT MINDESTENS EINER BESCHICHTUNG AUF DER OBERFLÄCHE**
ROLLER FOR A ROLLER FURNACE HAVING AT LEAST ONE COATING ON THE SURFACE
ROULEAU POUR FOUR À ROULEAUX, COMPRENANT AU MOINS UN REVÊTEMENT SUR LA SURFACE

(30) Priorität: 18.07.2016 DE 102016113153; 27.06.2017 DE 102017114165
(43) Veröffentlichungstag der Anmeldung: 22.05.2019
(73) Patentinhaber: Saint-Gobain IndustrieKeramik Rödental GmbH, 96472 Rödental (DE)
(72) Erfinder: DORST, Hans-Ulrich, 96472 Rödental (DE); HERINGKLEE, Lothar, 96472 Rödental (DE)
(74) Vertreter: Gebauer, Dieter Edmund
(86) Internationale Anmeldenummer: PCT/EP2017/066447
(87) Internationale Veröffentlichungsnummer: WO 2018/015132

(56) Entgegenhaltungen:
- WO-A2-2016/005454

## Beschreibung

Die vorliegende Erfindung betrifft einen beschichteten keramischen Rollengrundkörper, insbesondere zur Verwendung in einem Rollenofen zur Warmumformung von mit AlSi beschichteten Blechen.

Durch Warmumformung von Karosserieteilen im Automobilbau können bei geringeren Fertigungskosten durch Wegfall von Fertigungsschritten und bei geringeren Materialeinsatz gleichzeitig besser ausgehärtete Materialien hergestellt werden. Dazu werden vorgeformte Bauteile in einem Ofen auf 900°C bis 1000 °C erhitzt, von einem Industrieroboter in eine Presse gelegt und bei etwa 700 °C in die gewünschte Form gepresst.

Als Schutz gegen Verzunderung und als Legierungsbestandteil sind die Metallbleche mit einer AlSi-Schutzschicht überzogen. Zum Erwärmen der Bleche werden überwiegend Rollenöfen eingesetzt, wobei die Stahlbleche meistens direkt auf die Rollen aufgelegt werden oder als Alternative in Warenträgern liegend durch den Rollenofen transportiert werden. Beim Erwärmen der AlSi-beschichteten Stahlbleche auf 900 °C bis etwa 1000°C kommt es zum Erweichen der AlSi-Schutzschicht und in Folge bei Kontakt mit dem Rollenwerkstoff zu Kontaktkorrosion.

Mögliche Korrosionsmechanismen sind eine Diffusion von AlSi in das poröse Gefüge der Rolle, Anhaftungen von AlSi an der Rollenoberfläche oder eine Reaktion in Form einer chemischen Umwandlung mit dem Rollenwerkstoff. Diffundiert AlSi in das Rollengefüge kommt es durch Unterschiede im Ausdehnungskoeffizienten zwischen Rollenmatrix, infiltrierten AlSi und korrosionsbedingten Reaktionsprodukten zu Wärmespannungen und in Folge zu Abplatzungen an der Rollenoberfläche oder zum Rollenbruch. Anhaftungen von AlSi am Rollenwerkstoff können sich bis zu mehreren Millimetern aufbauen, wodurch es zu Verschiebungen der Stahlbleche während des Transports durch den Ofen kommt und in Folge zu Beschädigung an der faserausgekleideten Ofenwand oder zu Problemen bei der Übernahme der Bleche durch den Industrieroboter.

Für Rollenöfen, die bei Temperaturen > 600°C betrieben werden, sind keramische Rollen aufgrund von Temperaturfestigkeit, Kriechbeständigkeit und Temperaturwechselbeständigkeit notwendig.

Aus der DE 102011051270 A1 ist eine Rolle für einen Rollenofen bekannt, welche einen keramischen Rollengrundkörper aufweist, wobei der Rollengrundkörper mit einer oxidischen Tragflächenbeschichtung versehen ist. Die Tragflächenbeschichtung enthält zumindest ein Oxid ausgewählt aus der Gruppe Al₂O₃, ZrO₂, Cr₂O₃, Y₂O₃, SiO₂, CaO, MgO, K₂O, TiO₂ und/oder FeO in einem Anteil von mindestens 50 Gew.-%.

Aus der EP 2703759 A1 ist ein Tragmittel für Öfen bekannt, in denen metallische Werkstücke warmumformt werden. Das Tragmittel weist eine Oberfläche aus einem thermostabilen Metalloxid oder Metallnitrid, wie beispielsweise Aluminiumoxid, Boroxid oder Bornitrid auf.

In DE 102011051270 A1 und EP 2703759 A1wird SiO₂ als Beschichtungsmittel beschrieben. Die dort beschriebenen Maßnahmen können die Korrosion nicht verhindern, da SiO₂ durch die Schmelze von Nichteisenmetallen benetzt wird und dadurch SiO₂ zu metallischem Silizium reduziert werden kann. SiO₂ wird häufig für Beschichtungen als keramisches Bindemittel eingesetzt oder ist häufig in Spuren als glasige Phase enthalten.

In EP 0750169 A1 werden Formen einer Rolle für Rollenöfen beschrieben, die zum Brennen von keramischen Fliesen zum Einsatz kommen. Bekannt sind keramische Rollen auf Basis Aluminiumoxid, Mullit, Quarzgut, die jedoch nicht korrosionsbeständig gegen AlSi-Legierungen sind. Bei Rollen auf Basis SiC, besonders bei nichtoxydisch gebundenen SiC, wie nitrid gebundenen SiC oder N-SiC, wird zwar keine Infiltration oder Reaktion mit dem Rollengefüge beobachtet, es kommt aber zu Aufwachsungen.

Die Tragflächenbeschichtung soll die Benetzbarkeit der Rollen gegenüber AlSi-Metallschmelzen verringern. Die Tragfläche der Rolle soll durch die Tragflächenbeschichtung sehr glatt und wenig porös sein. Bekanntlich enthält die Tragfläche dieser Beschichtung zu mindestens ein Oxid, wie Aluminiumoxid, Zirkoniumoxid, Chromiumoxid, Yttriumoxid, Siliziumoxid, Kalziumoxid, Magnesiumoxid, Kaliumoxid, Titaniumoxid und/oder Eisenoxid von mindestens 50% Gewicht.

Die bekannten Maßnahmen können eine Korrosion nicht verhindern, da nicht berücksichtigt wurde, dass bei Anwesenheit von SiO₂, das häufig auch für Beschichtungen als keramisches Bindemittel eingesetzt wird oder in Spuren, häufig als Glasphase vorliegt, der Korrosionsschutz verloren geht, da SiO₂ von der Schmelze benetzt wird und zu metallischen Silizium reduziert werden kann. In DE 102011051270 A1 und EP 2703759 A1 wird SiO₂ als mögliches Beschichtungsmittel gelistet

Bei der Warmumformung mit AlSi beschichteten Blechen ergibt sich das Problem, dass die Werkstoffe der Rollen in den Rollenöfen mit dem AlSi der Beschichtung der Werkstücke chemisch reagieren und daher die Standzeit der Rollen gering ist.

WO 2016/005454 A beschreibt eine Rolle mit einer abrasiven Beschichtung, die 83-98 Gew.-% von Si₃N₄, SiC oder SiAION or einer Mischung hiervon, sowie 2-17 Gew.-% von Al₂O₃, SiO₂, ZrO₂, CeO₂, Y₂O₃ oder einer Mischung hiervon, enthält.

Die Aufgabe der vorliegenden Erfindung besteht darin, eine Rolle für einen Rollenofen für die Warmumformung mit AlSi beschichteten Metallteilen bereitzustellen, die eine deutlich längere Standzeit und eine höhere Lebensdauer als bekannte Rollen aufweist.

Die Aufgabe der vorliegenden Erfindung wird durch eine Rolle für einen Rollenofen mit einer verbesserten Beschichtung gemäß Anspruch 1 gelöst. Vorteilhafte Ausgestaltungen der Erfindung gehen aus den Unteransprüchen hervor.

Die Aufgabe der vorliegenden Erfindung wird daher durch eine Rolle für einen Rollenofen mit einem Rollengrundkörper und einer Beschichtung auf der Oberfläche gelöst, wobei die Beschichtung eine Schicht aufweist, enthaltend:

| | |
|---|---|
| 10,0 - 30,0 Gew.-% Si | |
| 10,0 - 30,0 Gew.-% Al(OH)₃ | |
| 1,0 - 3,0 Gew.-% B₄C | |
| 0,5 - 1,5 Gew.-% Y₂O₃ | |
| 0,1 - 1,0 Gew.-% Fe₂O₃ | |

und Rest Al₂O₃ und unvermeidbare Verunreinigungen.

Der Anteil an Al₂O₃ kann von 40,0 Gew.-% bis 70,0 Gew.-% betragen. Der Anteil von Al₂O₃ kann bis zu 78,4 Gew.-% betragen.

Eine bevorzugte Ausgestaltung der Erfindung ist eine Rolle, wobei die Beschichtung eine Schicht aufweist, enthaltend:

| | |
|---|---|
| 15,0 - 25,0 Gew.-% Si | |
| 15,0 - 25,0 Gew.-% Al(OH)₃ | |
| 1,5 - 2,5 Gew.-% B₄C | |
| 0,8 - 1,2 Gew.-% Y₂O₃ | |
| 0,3 - 0,7 Gew.-% Fe₂O₃ | |

und Rest Al₂O₃ und unvermeidbare Verunreinigungen.

Der Anteil an Al₂O₃ kann bevorzugt von 50,0 Gew.-% bis 60,0 Gew.-% betragen. Der Anteil an Al₂O₃ kann bis zu 67,4 Gew.-% betragen.

Mit dieser Beschichtung werden bei der Warmumformung von mit AlSi beschichteten Metallteilen gute Ergebnisse erzielt.

Die Aufgabe der vorliegenden Erfindung wird weiter durch eine Rolle für einen Rollenofen mit einem Rollengrundkörper und einer Beschichtung auf der Oberfläche gelöst, wobei die Beschichtung mindestens eine Schicht aufweist,
a) erste Schicht, enthaltend:

| | |
|---|---|
| 10,0 - 30,0 Gew.-% Si | |
| 10,0 - 30,0 Gew.-% Al(OH)₃ | |
| 1,0 - 3,0 Gew.-% B₄C | |
| 0,5 - 1,5 Gew.-% Y₂O₃ | |
| 0,1 - 1,0 Gew.-% Fe₂O₃ | |

und Rest Al₂O₃ und unvermeidbare Verunreinigungen.
Der Anteil an Al₂O₃ kann von 40,0 Gew.-% bis 70,0 Gew.-% betragen. Der Anteil von Al₂O₃ kann bis zu 78,4 Gew.-% betragen.
und
b) zweite Schicht, enthaltend:

| | |
|---|---|
| 10,0 - 30,0 Gew.-% Si | |
| 10,0 - 30,0 Gew.-% | Al(OH)₃ |
| 1,0 - 3,0 Gew.-% | B₄C |
| 2,0 - 4,0 Gew.-% | Y₂O₃ |

und Rest Al₂O₃ und unvermeidbare Verunreinigungen.

Der Anteil an Al₂O₃ kann bevorzugt von 40,0 Gew.-% bis 70,0 Gew.-% betragen. Der Anteil an Al₂O₃ kann bis zu 77,0 Gew.-% betragen.

Die erste Schicht (a) ist erfindungsgemäß eine Grundschicht. Die zweite Schicht (b) ist erfindungsgemäß eine Deckschicht.

Eine bevorzugte Ausgestaltung der Erfindung ist eine Rolle, wobei die Beschichtung mindestens eine Schicht aufweist, enthaltend:
a) erste Schicht, enthaltend:

| | |
|---|---|
| 15,0 - 25,0 Gew.-% Si | |
| 15,0 - 25,0 Gew.-% Al(OH)₃ | |
| 1,5 - 2,5 Gew.-% B₄C | |
| 0,8 - 1,2 Gew.-% Y₂O₃ | |
| 0,3 - 0,7 Gew.-% Fe₂O₃ | |

und Rest Al₂O₃ und unvermeidbare Verunreinigungen.
Der Anteil an Al₂O₃ kann bevorzugt von 50,0 Gew.-% bis 60,0 Gew.-% betragen. Der Anteil an Al₂O₃ kann bis zu 67,4 Gew.-% betragen.
und
b) zweite Schicht, enthaltend:

| | |
|---|---|
| 15,0 - 25,0 Gew.-% Si | |
| 15,0 - 25,0 Gew.-% Al(OH)₃ | |
| 1,5 - 2,5 Gew.-% B₄C | |
| 2,8 - 3,2 Gew.-% Y₂O₃ | |

und Rest Al₂O₃ und unvermeidbare Verunreinigungen.

Der Anteil an Al₂O₃ kann bevorzugt von 50,0 Gew.-% bis 60,0 Gew.-% betragen. Der Anteil an Al₂O₃ kann bis zu 65,7 Gew.-% betragen.

Mit dieser Beschichtung werden bei der Warmumformung von mit AlSi beschichteten Metallteilen gute Ergebnisse erzielt.

Die erfindungsgemäße Rolle enthält eine Schicht, die erste oder die Grundschicht. Die Grundschicht ist eine im Vergleich zu der zweiten Schicht oder Deckschicht eine harte Schicht. Für den Langzeitgebrauch hat es sich als vorteilhaft erwiesen, die weichere Deckschicht aufzutragen. Die Deckschicht nutzt sich durch Verschleiß zwar ab, da die harte Grundschicht vorhanden ist, kann die Rolle wesentlich länger betrieben werden als herkömmliche Rollen für einen Rollenofen. Daher ist eine Rolle mit zwei erfindungsgemäßen Schichten sehr vorteilhaft.

Der feuerfeste Grundkörper wird vorzugsweise auf der Basis von feuerfestem Material, wie Mullit, Al₂O₃, SiO₂ und/oder SiC hergestellt. Erfindungsgemäß werden bei porösen Materialien die Poren durch einen Schutzschicht Primer verschlossen, um Oxidation und Metallinfiltration zu verhindern.

Die Rolle für einen Rollenofen kann unterschiedliche Formen haben. Geläufig sind glatte Rollen und Rollen mit Rippen, wie sie in EP 0750169 A1 zum Brennen von Keramikfliesen beschrieben werden. Rollen mit Rippen ermöglichen, dass Kühlluft auf den Fliesenboden zirkuliert, um thermische Spannungen in dem gesinterten Produkt zu verringern. Rollen mit Rippen werden daher in Rollenöfen mit Schockkühlung verwendet, um Kühlrisse in dem gesinterten Produkt zu vermeiden.

Eine bevorzugte Ausgestaltung der Erfindung ist eine Rolle, wobei die Grundschicht eine Dicke von 0,2 mm bis 1,0 mm aufweist. Mit diesen Dicken werden gute Ergebnisse bei der Bearbeitung von AlSi beschichteten Metallteilen erreicht.

Eine bevorzugte Ausgestaltung der Erfindung ist eine Rolle, wobei die Deckschicht eine Dicke von 0,1 mm bis 0,5 mm aufweist. Mit diesen Dicken werden gute Ergebnisse bei der Bearbeitung von AlSi beschichteten Metallteilen erreicht.

Eine bevorzugte Ausgestaltung der Erfindung ist eine Rolle, wobei die Rolle einen Durchmesser von 60 mm bis 80 mm aufweist. Mit diesen Durchmessern werden gute Ergebnisse bei der Bearbeitung von AlSi beschichteten Metallteilen erreicht.

Eine bevorzugte Ausgestaltung der Erfindung ist eine Rolle, wobei die Wand der Rolle eine Dicke von 6 mm bis 12 mm aufweist. Mit diesen Dicken werden gute Ergebnisse bei der Bearbeitung von AlSi beschichteten Metallteilen erreicht.

Eine bevorzugte Ausgestaltung der Erfindung ist eine Rolle, wobei die Rolle eine Länge von 2500 mm bis 4000 mm aufweist. Die Rollenlänge ist sehr vorteilhaft für den Rollenofen.

Eine bevorzugte Ausgestaltung der Erfindung ist eine Rolle, wobei die Rolle an beiden Enden auf einer Länge von 80 mm bis 100 mm eine Verjüngung aufweist.

Das Prinzip einer geringen Wärmeübertragung durch Rollen mit Rippen wird auch für die Warmumformung in Rollenofen angewendet. Dabei soll eine zu starke Abkühlung der Metallteile, zum Beispiel von Blechen oder Metallplatten aufgrund der hohen Masse der Rollen vermieden werden. Daher werden Rollen mit Rippen bevorzugt am Ofenausgang vor der Umladestation zu den Industrierobotern benutzt.

Die erfindungsgemäße Rolle umfasst vorzugsweise eine glatte Rolle oder Rolle mit Rippen, um die Kontaktflächen zwischen dem Metallblech und der Keramikrolle zu vermindern. Die erfindungsgemäße Rolle umfasst eine Rolle mit einer SiO₂ freien Korrosionsschutzbeschichtung auf Basis von Silizium-Nitrid.

Die Rippen der Rolle sind so ausgelegt, dass sie sich verjüngen, wobei ein Radius an der Spitze so gewählt ist, dass Abplatzen der spröden Keramik verhindert und Kratzspuren auf den Metallplatten vermieden werden.

Der Grundkörper wird nach an sich bekannten Verfahren wie Extrusion oder Gießen von glatten Rollen und vorzugsweise Gießen von Rollen mit Rippen hergestellt.

Die Rolle könnte erfindungsgemäß aus einem Keramikmaterial der Gruppe Mullit, Alumina, oder SiC, oder deren Mischungen bestehen, vorzugsweise aus SiC Werkstoffen, wie Si-SiC, oder poröse SiC-Werkstoffe, wie N-SiC und R-SiC, vorzugsweise aus Siliziumnitrid, Siliziumoxinitrid, Silicium-M-oxynitrid, oder deren Mischungen.

Da sowohl dichte SiC Werkstoffe, wie Si-SiC, oder poröse SiC-Werkstoffe, wie N-SiC und R-SiC, zum Einsatz kommen können, wird erfindungsgemäß bei porösen Werkstoffen eine erste Schutzschicht ein Primer zum Verschließen der Poren als Schutz gegen Oxidation und zur Verhinderung von Metallinfiltration aufgebracht.

Nach dem Auftragen der ersten Schutzschicht wird die Beschichtung bei 110°C bis zur Gewichtskonstanz getrocknet, um dann bei 1200 °C bis 1500°C, vorzugsweise bei 1350 °C bis 1480°C, und einer Haltezeit bis 8 h in nicht-oxidierender Atmosphäre, vorzugsweise unter N₂-Atmosphäre eingebrannt.

Die SiO-freie Beschichtung beruht vorzugsweise auf Siliziumnitrid, Siliziumoxynitrid, oder Silicium-M-oxynitrid Körnungen mit einer durchschnittlichen Korngröße von 0.1 µm bis 150µm. Der N Gehalt der Schicht nach dem Brennen liegt bei 20 Gew.-% bis 80 Gew.-%, vorzugsweise 25 Gew.-% bis 50 Gew.-%. Nach dem Auftragen wird die Beschichtung bei 110 °C bis zur Gewichtskonstanz getrocknet. Ein Brand der Si₃N₄-Beschichtung erfolgt bei 1200 °C bis 1500 °C, vorzugsweise bei 1350 °C bis 1480 °C und einer Haltezeit von bis 8 h in nicht-oxidierender Atmosphäre, vorzugsweise unter N₂-Atmosphäre. Durch diese Deckschicht wird die Tragfläche der erfindungsgemäßen Rolle sehr glatt. Durch diese nichtoxydische Tragflächenbeschichtung wird die Reaktion mit nicht Eisen Schmelzungen, wie Aluminium-Siliziumlegierung insbesondere von einem Beschichtungswerkstoff von beschichteten Stahlblechen vermieden.

Die Schichtdicke der Grundschicht beträgt 0,2 mm bis 1,0 mm. Die Schichtdicke der Deckschicht beträgt 0,1 mm bis 0,5 mm.

Um den Korrosionswiderstand zu vergrößern und die Nitrid-Beschichtung thermo-chemisch zu stabilisieren, ist es vorteilhaft, dass die Suspension Bormaterial, wie B₄C, oder/und Y₂O₃ Pulver enthält. Der B₄C und /oder Y₂O₃ Gehalt liegt zwischen 1,5 Gew.-% bis 5 Gew.-% der Schicht nach dem Brennen.

Überraschenderweise hat sich gezeigt, dass solche aufgeführte Si₃N₄-Beschichtungen unter Einsatzbedingung für Warmumformung unter der kritischen Bedingung einer oxidierenden Atmosphäre ausreichend stabil gegen Oxidation sind. Das Benetzungsverhalten gegenüber AlSi-Legierungen verändert sich auch im Langzeiteinsatz durch SiO₂ -Bildung nicht.

Die Aufgabe der vorliegenden Erfindung wird durch die Verwendung der Rolle für einen Rollenofen mit einer Beschichtung auf der Oberfläche zum Warmumformen von Metallteilen, insbesondere von AlSi-beschichteten Blechen gelöst.

Die vorliegende Erfindung wird anhand von Beispielen und einer Zeichnung näher erläutert. Es wurden vier erfindungsgemäße Beispiele und zwei Vergleichsbeispiele durchgeführt.

Als Rollenmaterial wurde Nitrid-gebundenes SiC, Silizium infiltriertes SiC und rekristallisiertes SiC, Mullit oder Gemische davon verwendet. Die Beschichtung wurde auf eine Rolle mit einem Durchmesser von 40 mm und einer Länge von 300 mm aufgetragen, für die Beurteilung der Haftung der Beschichtung auf einer gekrümmten Oberfläche und für die Korrosionsprüfung auf Platten mit den Ausmaßen von 100 mm x 100 mm x 8 mm.

Für den Korrosionstest wurden die Rollen und Platten mit AlSi beschichteten Blechen sowie mit Würfeln aus verdichtetem AlSi beladen. Der Test wurde bei 900 °C in oxidierender Atmosphäre über 96 h in einem elektrisch beheizten Laborofen durchgeführt.

Die Erfindung wird im Folgenden anhand von Beispielen und Vergleichsbeispielen sowie einer Zeichnung näher erläutert. Die Erfindung wird dadurch in keiner Weise eingeschränkt.

### Beispiel 1

### Grundkörper beschichtet nur mit einer Grundschicht

NSiC Grundkörper N-Durance^{®} wurde mit einer wässrigen Suspension AnnaPlast 171-5 (Tabelle 4) beschichtet
dann bei 110 °C 1 Stunde getrocknet und
dann bei 1470 °C 7 Stunden in einer N₂ -Atmosphäre gesintert. Nähere Angaben gehen aus Tabelle 1 hervor.

### Beispiel 2

### Grundkörper beschichtet mit einer Grundschicht und einer Deckschicht

NSiC Grundkörper N-Durance^{®} wurde mit einer wässrigen Suspension von AnnaPlast 171-5 (Tabelle 4) beschichtet,
dann bei 110 °C 1 Stunde getrocknet,
dann mit einer wässrigen Suspension AnnaPlast 171-3 (Tabelle 4) beschichtet und
dann bei 110 °C 1 Stunde getrocknet und
dann bei 1470 °C 7 Stunden in einer N₂-Atmosphäre gesintert. Nähere Angaben gehen aus Tabelle 1 hervor.

**Tabelle 1: Beispiel 1 und Beispiel 2**

| **Erfindung** | | **Beispiel 1** | **Beispiel 2** |
|---|---|---|---|
| **Bestandteile** | Grundkörper | Gebrannt enthaltend: | Gebrannt enthaltend: |
| | Grundkörper enthält: | N-Durance^{®} | N-Durance^{®} |
| | | Einfach beschichtet | Zweifach beschichtet |
| | Schicht 1 enthält: | siehe Apl 171-5 | Apl 171-5 |
| | Schicht 2 enthält: | keine 2. Schicht | Apl 171-3 |
| | Einbrand | 1470 °C - N₂ Atmosphäre | 1470 °C - N₂ Atmosphäre |
| **Feldversuch mit Rollen** | Temperatur | 900 °C | 900 °C |
| | Zeit | < 4000 Std. | < 4000 Std. |
| | Ergebnis | keine Infiltration oder Reaktion mit dem Rollengefüge, geringe, gleichmäßige, leicht lösbare Anbackung | keine Infiltration oder Reaktion mit dem Rollengefüge, sehr geringe, gleichmäßige, leicht lösbare Anbackung |
| **Korrosionstest** | Temperatur | 900 °C | 900 °C |
| | Zeit | 90 Std. | 90 Std. |
| | | keine Infiltration | keine Infiltration |
| | Ergebnis | Keine Anbackung | Keine Anbackung |

### Beispiel 3

Grüner Grundkörper beschichtet mit einer Grundschicht, wobei die Schicht Siliziumoxid frei war.

NSiC Grundkörper N-Durance^{®} wurde mit einer wässrigen Suspension von AnnaPlast 171-5 (Tabelle 4) beschichtet
dann bei 110 °C 1 Stunde getrocknet und
dann bei 1470 °C 7 Stunden in einer N₂ -Atmosphäre gesintert. Nähere Angaben gehen aus Tabelle 2 hervor.

### Beispiel 4

Grüner Grundkörper beschichtet mit einer Grundschicht und einer Deckschicht, wobei beide Schichten Siliziumoxid frei waren.

NSiC Grundkörper N-Durance^{®} wurde mit einer wässrigen Suspension von (AnnaPlast 171-5 (Tabelle 4) beschichtet,
dann bei 110 °C 1 Stunde getrocknet,
dann mit einer wässrigen Suspension von AnnaPlast 171-3 (Tabelle 4) beschichtet und dann bei 110 °C 1 Stunde getrocknet und
dann bei 1470 °C 7 Stunden in einer N₂-Atmosphäre gesintert. Nähere Angaben gehen aus Tabelle 2 hervor.

**Tabelle 2: Beispiel 3 und Beispiel 4**

| **Erfindung** | | **Beispiel 3** | **Beispiel 4** |
|---|---|---|---|
| **Bestandteile** | Grundkörper | Ungebrannt enthaltend: | Ungebrannt enthaltend: |
| | Grundkörper enthält: | N-Durance^{®} | N-Durance^{®} |
| | | Einfach beschichtet | Zweifach beschichtet |
| | Schicht 1 enthält: | Apl 171-5 | Apl 171-5 |
| | Schicht 2 enthält: | keine 2. Schicht | Apl 171-3 |
| | Einbrand | 1470 °C - N2 Atmosphäre | 1470 °C - N2 Atmosphäre |
| **Feldversuch mit Rollen** | Temperatur | 900 °C | 900 °C |
| | Zeit | < 4000 Std. | < 4000 Std. |
| | Ergebnis | keine Infiltration oder Reaktion mit dem Rollengefüge geringe, gleichmäßige, leicht lösbare Anbackung | keine Infiltration oder Reaktion mit dem Rollengefüge sehr geringe, gleichmäßige, leicht lösbare Anbackung |
| **Korrosionstest** | Temperatur | 900 °C | 900 °C |
| | Zeit | 90 Std. | 90 Std. |
| | | keine Infiltration | keine Infiltration |
| | Ergebnis | Keine Anbackung | Keine Anbackung |

### Vergleichsbeispiele 1 und 2 (Stand der Technik)

Dazu wurden zwei Grundkörper NSiC Grundkörper N-Durance^{®} einfach mit einer Al₂O₃ und SiO₂ haltigen Beschichtung beschichtet,
dann bei 110 °C 1 Stunde getrocknet und
dann bei 1250 °C 7 Stunden in einer O₂-Atmosphäre gesintert. Nähere Angaben gehen aus Tabelle 3 hervor.

**Tabelle 3: Vergleichsbeispiel 1 und Vergleichsbeispiel 2**

| **Stand der Technik** | | **Vergleichsbeispiel 1** | **Vergleichsbeispiel 2** |
|---|---|---|---|
| **Bestandteile** | Grundkörper | Gebrannt enthaltend: | Gebrannt enthaltend: |
| | Grundkörper enthält: | Mullitische Rollen | |
| | | Mullit, Korund | N-Durance^{®} |
| | | Einfach beschichtet | Einfach beschichtet |
| | Schicht 1 enthält: | aus der Gruppe Al₂O₃ / SiO₂ | aus der Gruppe Al₂O₃ / SiO₂ |
| | Schicht 2 enthält: | keine 2. Schicht | keine 2. Schicht |
| | Einbrand | <1250 °C - O₂ Atmosphäre | < 1250 °C - O₂ Atmosphäre |
| **Feldversuch mit Rollen** | Temperatur | 900 °C | 900 °C |
| | Zeit | < 4000 Std. | < 4000 Std. |
| | Ergebnis | Feste, ungleichmäßige Anhaftung von AlSi an der Rollenoberfläche, AlSi diffundiert in das "poröse" Rollengefüge, Chemische Umwandlungen führen zum Rollenbruch. | Abtrag des Beschichtungsmaterials, Anhaftung von AlSi, Feste, ungleichmäßige Anhaftung von AlSi an der Rollenoberfläche. |
| **Korrosionstest** | Temperatur | 900 °C | 900 °C |
| | Zeit | 90 Std. | 90 Std. |
| | Ergebnis | Infiltration Anbackung | Infiltration Anbackung |

Wie aus den Tabellen 1 bis 3 hervorgeht haben erfindungsgemäße Rollen eine größere Standzeit als bereits bekannte Rollen. Bekannte Rollen aus den Vergleichsbeispielen zeigen die Nachteile dieser Rollen auf, nämlich Infiltration und Anbackung, was zum Abtrag des Beschichtungsmaterials und auch zum Rollenbruch führt. Das Ergebnis war unerwartet und überraschend.

Die nachstehende Tabelle 4 zeigt die Bestandteile der wässrigen Suspensionen zur Herstellung der Schichten.

**Tabelle 4**

| Schicht 1 | | Schicht 2 | |
|---|---|---|---|
| Apl 171-5 | | Apl 171-3 | |
| Grundschicht | | Deckschicht | |
| % | | % | |
| 19,704 | Si | 19,417 | Si |
| 19,704 | Al(OH)₃ | 19,417 | Al(OH)₃ |
| 57,143 | Al₂O₃ | 56,311 | Al₂O₃ |
| 1,970 | B₄C | 1,942 | B₄C |
| 0,494 | Fe₂O₃ | 0,000 | Fe₂O₃ |
| 0,985 | Y₂O₃ | 2,913 | Y₂O₃ |
| 100,000 | Gesamt | 100,000 | Gesamt |

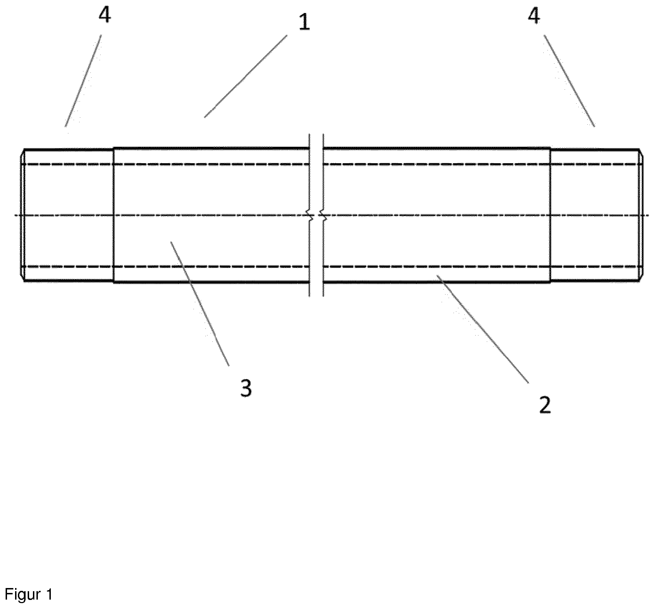

Die Zeichnung enthält Figur 1.

Die Figur 1 zeigt die Seitenansicht einer Rolle für einen Rollenofen mit einer Beschichtung auf der Oberfläche. Die beschichtete Rolle 1 besteht aus einem Grundkörper 2 und einer Beschichtung auf der Außenfläche des Grundkörpers der Rolle 1. Die Rolle 1 ist ein hohles Rohr mit einem Hohlraum 3. Die Rolle 1 weist an beiden Enden eine Verjüngung 4 auf, zur Befestigung der Antriebshülse. Die Rolle 1 enthält als Werkstoff N-Durance^{®}. Die Rolle 1 weist beispielhaft einen Durchmesser von 60 mm und eine Längen von 3070 mm auf. Die Rolle 1 ist an beiden Enden auf einer Länge von 80 mm auf einen Durchmesser von 59 mm verjüngt. Die Rolle weist erfindungsgemäß auf der äußeren Oberfläche eine Beschichtung mit mindestens einer oder mindestens zwei Schichten auf.

### Referenzzeichen

- 1: Rolle
- 2: Rollengrundkörper
- 3: Hohlraum der Rolle
- 4: Verjüngung an den Enden der Rolle

## Patentansprüche

1. Rolle für einen Rollenofen mit einem Rollengrundkörper und einer Beschichtung auf der Oberfläche, wobei die Beschichtung mindestens eine Schicht aufweist, enthaltend:
| | |
|---|---|
| 10,0 - 30,0 Gew.-% Si | |
| 10,0 - 30,0 Gew.-% Al(OH)₃ | |
| 1,0 - 3,0 Gew.-% B₄C | |
| 0,5 - 1,5 Gew.-% Y₂O₃ | |
| 0,1 - 1,0 Gew.-% Fe₂O₃ | |
und Rest Al₂O₃.

2. Rolle für einen Rollenofen nach Anspruch 1, wobei die Schicht enthält:
| | |
|---|---|
| 15,0 - 25,0 Gew.-% Si | |
| 15,0 - 25,0 Gew.-% Al(OH)₃ | |
| 1,5 - 2,5 Gew.-% B₄C | |
| 0,8 - 1,2 Gew.-% Y₂O₃ | |
| 0,3 - 0,7 Gew.-% Fe₂O₃ | |
und Rest Al₂O_{3.}3.

3. Rolle für einen Rollenofen nach Anspruch 1, wobei die Beschichtung aufweist,
a) eine Grundschicht, enthaltend:
| | |
|---|---|
| 10,0 - 30,0 Gew.-% Si | |
| 10,0 - 30,0 Gew.-% Al(OH)₃ | |
| 1,0 - 3,0 Gew.-% B₄C | |
| 0,5 - 1,5 Gew.-% Y₂O₃ | |
| 0,1 - 1,0 Gew.-% Fe₂O₃ | |
und Rest Al₂O₃
und
b) eine Deckschicht, enthaltend:
| | |
|---|---|
| 10,0 - 30,0 Gew.-% Si | |
| 10,0 - 30,0 Gew.-% Al(OH)₃ | |
| 1,0 - 3,0 Gew.-% B₄C | |
| 2,0 - 4,0 Gew.-% Y₂O₃. | |
und Rest Al₂O₃.

4. Rolle für einen Rollenofen nach Anspruch 3, wobei
a) die Grundschicht enthält:
| | |
|---|---|
| 15,0 - 25,0 Gew.-% Si | |
| 15,0 - 25,0 Gew.-% Al(OH)₃ | |
| 1,5 - 2,5 Gew.-% B₄C | |
| 0,8 - 1,2 Gew.-% Y₂O₃ | |
| 0,3 - 0,7 Gew.-% Fe₂O₃ | |
und Rest Al₂O₃
und
b) die Deckschicht enthält:
| | |
|---|---|
| 15,0 - 25,0 Gew.-% Si | |
| 15,0 - 25,0 Gew.-% Al(OH)₃ | |
| 1,5 - 2,5 Gew.-% B₄C | |
| 2,8 - 3,2 Gew.-% Y₂O₃ | |
und Rest Al₂O₃.

5. Rolle für einen Rollenofen nach einem der Ansprüche 3 bis 4, wobei der Anteil an Al₂O₃ in der Grundschicht 40,0 - 70,0 Gew.-%, bevorzugt 50,0 - 60,0 Gew.-% beträgt und der Anteil an Al₂O₃ in der Deckschicht 40,0 - 70,0 Gew.-%, bevorzugt 50,0 - 60,0 Gew.-% beträgt.

6. Rolle für einen Rollenofen nach einem der Ansprüche 3 bis 5, wobei die Grundschicht eine Dicke von 0,2 mm bis 1,0 mm aufweist.

7. Rolle für einen Rollenofen nach einem der Ansprüche 3 bis 6, wobei die Deckschicht eine Dicke von 0,1 mm bis 0,5 mm aufweist.

8. Rolle für einen Rollenofen nach einem der Ansprüche 1 bis 7, welche einen Durchmesser von 60 mm bis 80 mm aufweist.

9. Rolle für einen Rollenofen nach einem der Ansprüche 1 bis 8, wobei eine Wand der Rolle eine Dicke von 6 mm bis 12 mm aufweist.

10. Rolle für einen Rollenofen nach einem der Ansprüche 1 bis 9, welche eine Länge von 2500 mm bis 4000 mm aufweist.

11. Rolle für einen Rollenofen nach einem der Ansprüche 1 bis 10, welche an beiden Enden auf einer Länge von 80 mm bis 100 mm eine Verjüngung aufweist.

12. Verwendung einer Rolle für einen Rollenofen mit einer Beschichtung auf der Oberfläche nach einem der Ansprüche 1 bis 11 zum Warmumformen von Metallteilen, insbesondere von AlSi-beschichteten Blechen.

## Claims

1. Roller for a roller furnace with a roller base body and a coating on the surface, wherein the coating has at least one layer, containing:
10.0 - 30.0 wt.-% Si
10.0 - 30.0 wt.-% Al(OH)₃
1.0 - 3.0 wt.-% B₄C
0.5 - 1.5 wt.-% Y₂O₃
0.1 - 1.0 wt.-% Fe₂O₃
and the remainder Al₂O₃.

2. Roller for a roller furnace according to claim 1, wherein the layer contains:
15.0 - 25.0 wt.-% Si
15.0 - 25.0 wt.-% Al(OH)₃
1.5 - 2.5 wt.-% B₄C
0.8 - 1.2 wt.-% Y₂O₃
0.3 - 0.7 wt.-% Fe₂O₃
and the remainder Al₂O₃.

3. Roller for a roller furnace according to claim 1, wherein the coating has
a) a base layer, containing:
10.0 - 30.0 wt.-% Si
10.0 - 30.0 wt.-% Al(OH)₃
1.0 - 3.0 wt.-% B₄C
0.5 - 1.5 wt.-% Y₂O₃
0.1 - 1.0 wt.-% Fe₂O₃
and the remainder Al₂O₃
and
b) a cover layer, containing:
10.0 - 30.0 wt.-% Si
10.0 - 30.0 wt.-% Al(OH)₃
1.0 - 3.0 wt.-% B₄C
2.0 - 4.0 wt.-% Y₂O₃
and the remainder Al₂O₃.

4. Roller for a roller furnace according to claim 3, wherein
a) the base layer contains:
15.0 - 25.0 wt.-% Si
15.0 - 25.0 wt.-% Al(OH)₃
1.5 - 2.5 wt.-% B₄C
0.8 - 1.2 wt.-% Y₂O₃
0.3 - 0.7 wt.-% Fe₂O₃
and the remainder Al₂O₃
and
b) the cover layer contains:
15.0 - 25.0 wt.-% Si
15.0 - 25.0 wt.-% Al(OH)₃
1.5 - 2.5 wt.-% B₄C
2.8 - 3.2 wt.-% Y₂O₃
and the remainder Al₂O₃.

5. Roller for a roller furnace according to one of claims 3 to 4, wherein the proportion of Al₂O₃ in the base layer is 40.0 - 70.0 wt.-%, preferably 50.0 - 60.0 wt.-% and the proportion of Al₂O₃ in the cover layer is 40.0 - 70.0 wt.-%, preferably 50.0 - 60.0 wt.-%.

6. Roller for a roller furnace according to one of claims 3 to 5, wherein the base layer has a thickness of 0.2 mm to 1.0 mm.

7. Roller for a roller furnace according to one of claims 3 to 6, wherein the cover layer has a thickness of 0.1 mm to 0.5 mm.

8. Roller for a roller furnace according to one of claims 1 to 7, which has a diameter of 60 mm to 80 mm.

9. Roller for a roller furnace according to one of claims 1 to 8, wherein a wall of the roller has a thickness of 6 mm to 12 mm.

10. Roller for a roller furnace according to one of claims 1 to 9, which has a length of 2500 mm to 4000 mm.

11. Roller for a roller furnace according to one of claims 1 through 10, wherein the roller has a taper on both ends over a length of 80 mm to 100 mm.

12. Use of a roller for a roller furnace with a coating on the surface according to one of claims 1 to 11 for hot forming metal parts, in particular AlSi coated metal sheets.

## Revendications

1. Rouleau pour un four à rouleaux avec un corps de base de rouleau et un revêtement sur la surface, dans lequel le revêtement a au moins une couche, contenant :
10,0 - 30,0 % en poids de Si
10,0 - 30,0 % en poids d'Al(OH)₃
1,0 - 3,0 % en poids de B₄C
0,5 - 1,5 % en poids de Y₂O₃
0,1 - 1,0 % en poids de Fe₂O₃
et le reste Al₂O₃.

2. Rouleau pour un four à rouleaux selon la revendication 1, dans lequel la couche contient :
15,0 - 25,0 % en poids de Si
15,0 - 25,0 % en poids d'Al(OH)₃
1,5 - 2,5 % en poids de B₄C
0,8 - 1,2 % en poids Y₂O₃
0,3 - 0,7 % en poids de Fe₂O₃
et le reste Al₂O₃.

3. Rouleau pour un four à rouleaux selon la revendication 1, dans lequel le revêtement comporte
a) une couche de base, contenant
10,0 - 30,0 % en poids de Si
10,0 - 30,0 % en poids d'Al(OH)₃
1,0 - 3,0 % en poids de B₄C
0,5 - 1,5 % en poids de Y₂O₃
0,1 - 1,0 % en poids de Fe₂O₃
et le reste Al₂O₃
et
b) une couche de couverture, contenant
10,0 - 30,0 % en poids de Si
10,0 - 30,0 % en poids d'Al(OH)₃
1,0 - 3,0 % en poids de B₄C
2,0 - 4,0 % en poids de Y₂O₃
et le reste Al₂O₃.

4. Rouleau pour un four à rouleaux selon la revendication 3, dans lequel
a) la couche de base contient
15,0 - 25,0 % en poids de Si
15,0 - 25,0 % en poids d'Al(OH)₃
1,5 - 2,5 % en poids de B₄C
0,8 - 1,2 % en poids Y₂O₃
0,3 - 0,7 % en poids de Fe₂O₃
et le reste Al₂O₃
et
b) la couche de couverture contient
15,0 - 25,0 % en poids de Si
15,0 - 25,0 % en poids d'Al(OH)₃
1,5 - 2,5 % en poids de B₄C
2,8 - 3,2 % en poids de Y₂O₃
et le reste Al₂O₃.

5. Rouleau pour un four à rouleaux selon l'une des revendications 3 à 4, dans lequel la proportion d'Al₂O₃ dans la couche de base est de 40,0 à 70,0 % en poids, de préférence de 50,0 à 60,0 % en poids, et la proportion d'Al₂O₃ dans la couche de couverture est de 40,0 à 70,0 % en poids, de préférence de 50,0 à 60,0 % en poids.

6. Rouleau pour un four à rouleaux selon l'une des revendications 3 à 5, dans lequel la couche de base a une épaisseur de 0,2 mm à 1,0 mm.

7. Rouleau pour un four à rouleaux selon l'une des revendications 3 à 6, dans lequel la couche de couverture a une épaisseur de 0,1 mm à 0,5 mm.

8. Rouleau pour un four à rouleaux selon l'une des revendications 1 à 7, qui a un diamètre de 60 mm à 80 mm.

9. Rouleau pour un four à rouleaux selon l'une des revendications 1 à 8, dans lequel une paroi du rouleau a une épaisseur de 6 mm à 12 mm.

10. Rouleau pour un four à rouleaux selon l'une des revendications 1 à 9, qui a une longueur de 2500 mm à 4000 mm.

11. Rouleau pour un four à rouleaux selon l'une des revendications 1 à 10, dans lequel le rouleau a un cône aux deux extrémités sur une longueur de 80 mm à 100 mm.

12. Utilisation d'un rouleau pour four à rouleaux avec un revêtement sur la surface selon l'une des revendications 1 à 11 pour le formage à chaud de pièces métalliques, en particulier de tôles revêtues d'AISi.
